(19) Europäisches Patentamt
European Patent Office
Office européen des brevets

(11) **EP 4 072 745 B1**

(12) **EUROPÄISCHE PATENTSCHRIFT**

(45) Veröffentlichungstag und Bekanntmachung des Hinweises auf die Patenterteilung:
**11.12.2024  Patentblatt 2024/50**

(21) Anmeldenummer: **20829557.6**

(22) Anmeldetag: **11.12.2020**

(51) Internationale Patentklassifikation (IPC):
**B08B 9/04** *(2006.01)*    **F16L 55/28** *(2006.01)*
**B60L 7/28** *(2006.01)*

(52) Gemeinsame Patentklassifikation (CPC):
**B08B 9/04; B60L 7/28**

(86) Internationale Anmeldenummer:
**PCT/EP2020/085805**

(87) Internationale Veröffentlichungsnummer:
**WO 2021/116433 (17.06.2021 Gazette 2021/24)**

(54) **MOLCH, INSBESONDERE INSPEKTIONS- ODER REINIGUNGSMOLCH**

PIG, IN PARTICULAR AN INSPECTION OR CLEANING PIG

RACLEUR, EN PARTICULIER RACLEUR D'INSPECTION OU DE NETTOYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2019   DE 102019134054**

(43) Veröffentlichungstag der Anmeldung:
**19.10.2022   Patentblatt 2022/42**

(73) Patentinhaber: **Rosen IP AG**
**6370 Stans (CH)**

(72) Erfinder: **SCHULTE, Michael**
**49716 Meppen (DE)**

(74) Vertreter: **Wischmeyer, André**
**Busse & Busse**
**Patent- und Rechtsanwälte**
**Partnerschaft**
**Großhandelsring 6**
**49084 Osnabrück (DE)**

(56) Entgegenhaltungen:
**EP-A2- 2 685 253          WO-A1-2019/146608**
**DE-A1- 102013 011 626     US-B1- 6 523 650**
**US-B1- 6 847 207**

**Beschreibung**

Die vorliegende Erfindung betrifft einen Molch, insbesondere einen Inspektions- oder Reinigungsmolch, zum Durchfahren einer Rohrleitung mit einer Rohrleitungswand, wobei der Molch eine Funktionseinheit zum Reinigen der Rohrleitung und/oder Aufnehmen von Rohrleitungsinformationen sowie zumindest eine zur Magnetisierung der Rohrleitungswand vorgesehene Magneteinheit mit einer Mehrzahl von Magneten aufweist.

Die DE 10 2013 011 626 A1 offenbart einen Gegenstand nach dem Oberbegriff des Anspruchs 1. Ein solcher Molch, der insbesondere Wasser-, Gas- oder Öl-Rohrleitungen bzw. -pipelines durchläuft, weist eine Magneteinheit auf, die durch die Erzeugung von Wirbelströmen in der Rohrleitungswand und deren Wechselwirkung mit dem diese erzeugenden Magnetfeld eine Bremswirkung entfaltet. Hierdurch wird die Geschwindigkeit in einen für eine Inspektion bzw. Messung oder auch Reinigung in sinnvollem Bereich gehalten. Nachteilig ist, dass die erfindungsgemäße Bremseinheit bei insbesondere längeren Molchen groß und schwer wird, um die nötigen Kräfte aufzubringen. Dies hat zur Folge, dass aufgrund der Länge der Magneteinheiten bezogen auf die Längsmittelachse des Molches diese vergleichsweise groß wird und somit die Bogengängigkeit des Molchs leidet.

Es ist Aufgabe der vorliegenden Erfindung, die Bogengängigkeit eines Molches zu verbessern.

Die Aufgabe wird gelöst durch einen Gegenstand gemäß Anspruch 1, vorteilhafte Ausgestaltungen der Erfindung sind den Unteransprüchen sowie der Beschreibung zu entnehmen.

Die Aufgabe wird gelöst durch einen Molch nach dem Oberbegriff des Anspruchs 1, bei dem die Magneteinheit mehrere Segmente mit jeweils zumindest einem Magnet aufweist und die Magnetisierungsrichtung aneinander angrenzender Segmente zumindest in etwa um 90°, vorzugsweise um genau 90°, gegeneinander angewinkelt bzw. gekippt sind. Durch die Ausbildung einer solchen Magneteinheit lassen sich die magnetischen Flussdichten erhöhen und es ergibt sich eine Reihe von Anordnungsmöglichkeiten, bei denen die Flussdichten in der Rohrleitungswand erhöht sind. Das auf die Rohrleitungswand einwirkende Magnetfeld und die dort erzeugten Magnetfelder sind stärker als bei üblicherweise verwendeten Magneten, so dass die gesamte Magneteinheit kürzer bauen kann.

Vorzugsweise umfasst ein Segment einen einzigen Magnet, insbesondere einen Permanentmagneten, es kann allerdings auch mehrere, hinsichtlich ihrer Magnetisierungsrichtung insbesondere gleich gerichtete Magnete aufweisen.

Aneinander angrenzende Magnete sind Magnete, die durch eine Magnetfassung getrennt oder sich direkt sich berührend aneinander liegen. Durch eine Magnetfassung getrennte Magnete liegen auf entgegengesetzten Seiten der Magnetfassung an dieser an, wobei die insbesondere nicht metallische Magnetfassung eine deutlich geringere Ausdehnung als die Magnete selbst aufweist. Aneinander angrenzende Magnete sind insbesondere nicht weiter als 3 mm voneinander beabstandet und liegen vorzugsweise direkt aneinander. Eine Einfassung der Segmente der Magneteinheit hingegen kann ähnliche Dicken wie das Fokussierelement aufweisen.

Insbesondere liegen die Magnete betrachtet in einer Richtung quer zur Längsrichtung des Molches, die im Betrieb parallel zu einer Längserstreckung einer Rohrleitung liegt, nebeneinander und somit in Längsrichtung betrachtet hintereinander.

Vorzugsweise handelt es sich bei den Magneten der Segmente bzw. der Magneteinheit um Permanentmagnete, insbesondere Neodym-Magnete. Insbesondere weisen die zueinander hingerichteten Pole zweier Segmente, die durch ein weiteres Segment getrennt sind, identische Polarität auf, d.h. sie bilden beide entweder zueinander hingerichtete Nord- oder Südpole aus, wobei zwischen den Magneten bzw. Segmenten ein Magnet eines weiteren Segments angeordnet ist. Insbesondere weist dieses dazwischen angeordnete Segment mit seiner eigenen Nordpol- oder Südpolseite im Betriebsfall ebenfalls in Richtung der Rohrleitungswand. Hierdurch erfolgt bereits eine erste Fokussierung der Magnetfeldlinien im Betriebsfall hin zur Rohrleitungswand, während auf der von der Rohrleitungswand abgewandten Seite der Magneteinheit, die dann entsprechend in der Regel zur Längsmittelachse des Molches gerichtet ist, eine Abschwächung der Magnetfeldlinien vorliegt. Solcherart nach Art von Halbach-Arrays aufgebaute Magneteinheiten führen bereits zu höheren Flussdichten und höheren Magnetfeldstärken in der Rohrleitungswand, wodurch die Magneteinheiten und damit entsprechende Molchsegmente kürzer bauen können.

Nachfolgend werden die Segmente, deren Magneten mit einer Magnetisierungsrichtung (Richtung Nord-Süd) im Wesentlichen senkrecht zur Rohrleitungswand (im Betriebsfall) versehen sind, auch als Vertikal-Segmente bezeichnet. Die Magnetisierungsrichtung, die durch eine gedachte Linie vom Nord- zum Südpol gekennzeichnet ist, liegt in einem Winkelbereich von ± 15° um eine Senkrechte auf die Oberfläche der Rohrleitungswand. Entsprechend ist die Magnetisierungsrichtung um 75° bis 105°, vorzugsweise um 90° zur Längsmittelachse des Molches geneigt, wenn der Molch in einer gewünschten Normalposition zentriert innerhalb der Pipeline läuft. Die Magnetisierungsrichtung eines Segments entspricht der Magnetisierungsrichtung des oder der das Segment ausbildenden Magnete. Zumindest in etwa um 90° gegeneinander angewinkelt bedeutet für die Zwecke der Anmeldung zwischen 85° und 95° gegeneinander angewinkelt.

Das Vertikal-Segment führt zur Einleitung von im Betriebsfall in Richtung der Rohrleitungswand in etwa oder direkt senkrecht gerichteten Magnetfeldlinien, was beispielsweise für eine EMAT-Wandstärkenmessung vorteilhaft ist.

Als Funktionseinheit wird allgemein zumindest eine Baugruppe eines auch mehrere Segmente aufweisenden Molches bezeichnet, die eine Funktion für den Molch aufweist und insbesondere die für den Einsatzzweck des Molches (Reinigen und/oder Aufnahme von Rohrleitungsinformationen) notwendige Funktionalität aufweist. Hierbei kann es sich auch um eine Funktionseinheit zur Geschwindigkeitskontrolle handeln. Ebenfalls kann es sich bei Molchen zum Reparieren einer Rohrleitung um eine Funktionseinheit zum Aufnehmen von Rohrleitungsinformationen handeln. Die Magneteinheit kann somit auch Teil einer Funktionseinheit sein.

Ein erfindungsgemäßer Molch ist weiterhin verbessert, wenn gemäß einer weiteren erfindungsgemäßen Ausbildung das Vertikal-Segment von einer Längsmittelachse aus betrachtet radial nach außen von einem Fokussierelement begrenzt ist. Ein solches insbesondere zumindest im Wesentlichen aus Stahl ausgebildetes Fokussierelement dient der weiteren Bündelung und Verstärkung der Magnetfeldlinien. Das Fokussierelement ist insbesondere magnetisierbar.

Es hat sich überraschenderweise gezeigt, dass besser als bei Magnetanordnungen nach Art eines Halbach-Arrays ohne Fokussierelement(en), bei denen die maximale Einbringung des Magnetfeldes durch die Sättigungsflussdichte begrenzt ist, durch die zusätzliche Verwendung des Fokussierelements sehr hohe Flussdichten realisiert werden können. Die Effizienz, d.h. die im Betriebsfall in einer Pipeline messbare Magnetfeldstärke erhöht sich um bis zu einen Faktor 3. Für die Erlangung bisheriger Flussdichten im Material der Rohrleitungswand zu verwendende Einheiten können im Umkehrschluss somit deutlich kleiner bauen als bisher, was wiederum insbesondere die Bogengängigkeit in der Rohrleitung verbessert.

Entsprechend ergibt sich bei einer Ausbildung eines erfindungsgemäßen Molches, bei der das Fokussierelement auf zumindest drei Seiten von einem Magnet begrenzt ist, wobei die auf diesen Seiten befindlichen Pole der Magnete identische Polarität aufweisen, insbesondere jedoch gleichzeitig zu unterschiedlichen Segmenten gehören, eine drastische Erhöhung der Magnetfeldstärken und Flussdichten in der Rohrleitungswand. Eine solche erfindungsgemäße Vorrichtung baut deutlich kürzer als gleiche Kräfte erzeugende Vorrichtungen aus dem Stand der Technik.

Die in dem Fokussierelement, die insbesondere zumindest im Wesentlichen aus Stahl umfassend Kobalt und Eisen, aufgebaut sind, vorhandenen Flussdichten liegen insbesondere bei bis zu 2,5 T, zumindest jedoch bei bis zu 2,3 T. Beispielsweise ergibt sich bei einer mit neun hintereinander liegenden Magneten versehenen Magneteinheit, bei der einander nachfolgende Magnete zueinander gekippte Magnetisierungsrichtungen aufweisen und die zu einer Art Halbach-Array angeordnet sind, eine Anziehungskraft zur Rohrleitung von bis zu 45 kN. Eine zusätzlich wie vorbeschrieben mit Fokussierelementen versehene, ansonsten jedoch in gleicher Abfolge und Magnetisierungsrichtung der gleich starken Magnete aufgebaute Magneteinheit führt zu Anziehungskräften von 180 kN. Typische Rohrleitungen im Öl- und Gasbereich von beispielsweise 3cm Wandstärke können hierdurch vollständig in Richtung radial nach außen gesättigt werden.

Mit entsprechenden Magneteinheiten versehene Molche können somit bei gleichen Kräften deutlich kürzer bauen und weisen eine verbesserte Bodengängigkeit auf. Durch die kleinere und damit auch leichtere Bauweise der erfindungsgemäßen Molche ist die Belastung der Rohrleitung während der Durchfahrt des Molches reduziert.

Zwecks weiterer Fokussierung der Magnetfeldlinien in Richtung zur oder von der Rohrleitungswand können die Magneteinheiten gemäß einem weiteren erfindungsgemäßen Ausführungsbeispiel in Längsrichtung eine aus einem magnetisierbaren Material zumindest mit ausgebildete Einfassung aufweisen, die die Magneten der Magneteinheit begrenzt. In einer Ansicht in Richtung quer zur Längsrichtung des Molches sind beispielsweise in Fahrtrichtung vorne und hinten entsprechende Einfassungen in der Magneteinheit vorhanden.

Alternativ oder ergänzend kann eine vorzugsweise länglich ausgebildete Magneteinheit eines erfindungsgemäßen Molches auch quer zur Längsmittelachse ausgerichtet sein, wobei dann ihre Außenseite vorzugsweise der Krümmung der Rohrleitungswand angepasst ist. Auch mit ihrer Längserstreckung parallel zur Längsmittelachse des Molches ausgebildete Magneteinheiten können mit einer Außenseite versehen sein, deren Krümmung hinsichtlich der Krümmung der Rohrleitungswand angepasst ist.

Die Einfassung wie auch das Fokussierelement sind insbesondere aus Kobalt-Eisen-Stahl, zumindest und insbesondere jedoch aus magnetisierbarem Stahl ausgebildet.

Gemäß einer erfindungsgemäßen Weiterbildung ist die Magneteinheit mit einem Sensor zur Aufnahme von Rohrleitungsinformationen, d.h. Inspektionsdaten versehen. Dieser Sensor ist insbesondere in dem Fokussierelement, in einer Ausnehmung desselben und/oder an dem Fokussierelement angeordnet und somit zentral in der Magneteinheit angeordnet. Nach dem Vorstehenden ergibt sich, dass die Magnetisierrichtungen der nicht als Vertikal-Segmente ausgebildeten Segmente vorzugsweise parallel oder angenähert parallel zur Längsmittelachse des Molches verlaufen. Ergänzend oder alternativ zu einer solchen Ausbildung als Inspektionsmolch, beispielsweise mit einem EMAT und/oder Wandstärkensensor kann die Magneteinheit eine Wirbelstrombremseinheit zumindest mit ausbilden, wobei vorzugsweise eine Mehrzahl von Magneteinheiten in Umfangsrichtung um die Längsmittelachse des Molches aneinander angrenzend, d. h. nebeneinanderliegend und gegebenenfalls versetzt in Richtung der Längsmittelachse des Molches vorhanden sind. Zusätzlich weist eine Wirbelstrombremseinheit konstruktive Merkmale umfassend Anbindungen an eine Tragstruktur, Federelemente zur Dämpfung und/oder Anschlussmöglichkeiten für weitere Molchsegmente auf.

Eine Wirbelstrombremseinheit ist dazu ausgebildet, durch Wechselwirkung der Magnete mit der Wand der Rohrleitung aufgrund von Wirbelstrom induzierten Magnetfeldern eine geschwindigkeitsabhängige Bremskraft zu erzeugen. Die für die Bremskraft relevante radiale Komponente der magnetischen Flussdichte ist aufgrund der erfindungsgemäßen Ausbildung maximiert.

Die Magneteinheit weist vorzugsweise in deren Längsrichtung zumindest drei hintereinander angeordnete Magnete auf, wobei gemäß einem weiteren Ausführungsbeispiel insbesondere sieben Magnete hintereinander angeordnet sind, so dass es vorzugsweise zwei von Nordpolen von Permanentmagneten begrenztes Fokussierelement und ein von Südpolen begrenztes Fokussierelement gibt. Weiterhin ist es insbesondere möglich, jeweilige Fokussierelemente nicht nur von drei sondern insbesondere auch von fünf Magneten seitlich begrenzen zu lassen.

Während Magneteinheiten zur Ausbildung von Wirbelstrombremseinheiten und/oder zur Inspektion typischerweise quader-, blockförmig und/oder länglich ausgebildet sind, kann es gemäß einem weiteren erfindungsgemäßen Ausführungsbeispiel von Vorteil sein, ringförmige Magneteinheiten auszubilden, um in der Rohrleitungswand gezielt entsprechende Magnetfelder zu erzeugen.

Um Hafteffekte an der Rohrleitungswand zu vermeiden weist ein erfindungsgemäßer Molch gemäß einem weiteren Ausführungsbeispiel wenigstens einen Abstandshalter auf, der vorzugsweise hinsichtlich eines Abstands der Magnete von der Wand einstellbar ausgebildet ist, und über den die Magneteinheit von der Rohrleitungswand beabstandet positionierbar ist.

Vorzugsweise beträgt die Länge der Magneteinheit einschließlich etwaiger Einfassungen weniger als 0,5 mal den Durchmesser $D_{Pipe}$ der Rohrleitung, vorzugsweise weniger als 0,3 mal $D_{Pipe}$, mit $D_{Pipe}$ = Durchmesser der Rohrleitung in Metern. Die Länge der Magneteinheit ist hierbei bezogen auf die Längsmittelachse des Molches.

In einer erfindungsgemäßen Ausbildung der Magneteinheit als Wirbelstrombremseinheit ist diese bei einer Geschwindigkeit von 2m/s in der Rohrleitung zur Erzeugung einer Bremskraft F in Abhängigkeit des Rohrleitungsdurchmessers von mindestens 7.000 N/m multipliziert mit $D_{Pipe}$ ausbildet, wobei $D_{Pipe}$ = der Durchmesser der Rohrleitung in Metern ist.

Weitere Vorteile und Einzelheiten der Erfindung sind der nachfolgenden Figurenbeschreibung zu entnehmen. Schematisch dargestellt zeigt:

Fig. 1 einen Abstandshalter mit einer Magneteinheit eines erfindungsgemäßen Molches in einer perspektivischen Darstellung,

Fig. 2 den Gegenstand nach Fig.1 in einer teilweise aufgeschnittenen Ansicht,

Fig. 3 einen Teil eines erfindungsgemäßen Molches umfassend eine Mehrzahl von Magneteinheiten in einer Seitenansicht,

Fig. 4 einen erfindungsgemäßen Molch in einer teilweise geschnittenen Ansicht,

Fig. 5 eine vereinfachte Ansicht einer Magneteinheit in einer teilweise geschnittenen Darstellung,

Fig. 6 eine Magneteinheit eines weiteren erfindungsgemäßen Gegenstands,

Fig. 7 eine Ansicht eines erfindungsgemäßen Gegenstands in einer Betriebsstellung in einer Schnittdarstellung,

Fig. 8 Magnetfeldlinien in einer Magneteinheit eines erfindungsgemäßen Gegenstands sowie einer angrenzenden Rohrleitungswand,

Fig. 9-11 weitere Varianten einer Magneteinheit.

Einzelne technische Merkmale der nach beschriebenen Ausführungsbeispiele können auch in Kombination mit vorbeschriebenen Ausführungsbeispielen sowie den Merkmalen des unabhängigen Anspruchs und gegebenenfalls weiterer Ansprüche zu erfindungsgemäßen Gegenständen kombiniert werden. Sofern sinnvoll, werden funktional gleichwirkende Elemente mit identischen Bezugsziffern versehen.

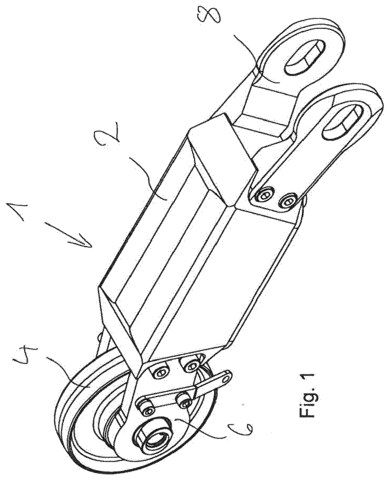

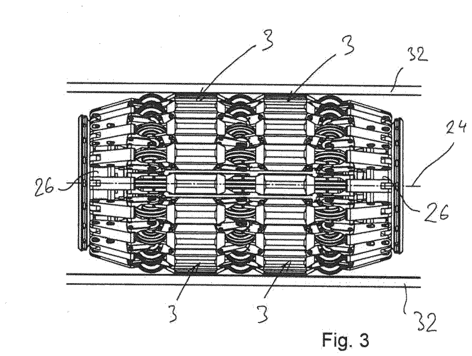

Perspektivisch ist in Fig. 1 ein eine Magneteinheit aufweisender Abstandshalter 1 eines erfindungsgemäßen Molches darstellt. Der Abstandshalter 1 umfasst eine Einhausung 2, in der eine in der Fig. 3 erkennbare Magneteinheit 3 eingehaust ist. Die Einhausung 2 ist mit ihrer zur Rohrleitungswand gerichteten Seite in der Fig.1 nach oben dargestellt abgebildet. Über ein Rad 4, welches in einer Gabel 6 drehbar gelagert ist, wird ein Abstand zur Rohrleitungswand eingestellt. An dem entgegengesetzten Ende des Abstandshalters 1 ist eine weitere Gabel 8 dargestellt, welcher an einem Tragrahmen des Molches gelagert und/oder gegebenenfalls mit einem weiteren Rad versehen werden kann.

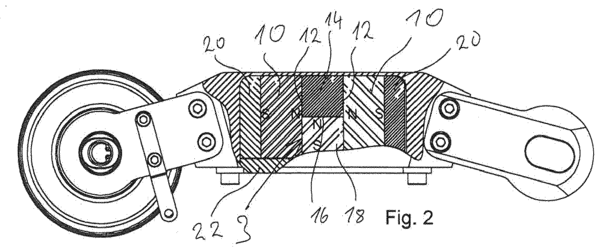

Die Magneteinheit 3 weist zwei Magnete 10 auf, deren Magnetisierungsrichtungen (Richtung Nord-Süd) parallel oder zumindest in etwa parallel zur Längsmittelachse des Molches verlaufen und deren Nordpolseiten 12 zueinander hin gewandt sind (Fig. 2). Gleichzeitig liegen beide Nordpolseiten 12 an einem Fokussierelement 14 an. Auf seiner radialen, zur Längsmittelachse 24 des noch näher zu bezeichnenden Molches befindlichen Seite liegt ein weiterer Magnet mit seiner Nordpolseite 16 an (vgl. Fig. 3). Dieser Magnet 18 weist eine Magnetisierungsrichtung auf, die um 90° gekippt bzw. angewinkelt zur Magnetisierungsrichtung der Magnete 10 ist.

In Längsrichtung des Molches weist die Magneteinheit Einfassungen 20 auf, die aus einem magnetisierbaren Material, vorzugsweise ein Stahl umfassend Kobalt und Eisen, aufgebaut sind, wobei die Einfassungen 20 die Magnete der Magneteinheit dergestalt begrenzen, dass sie an diese in Längsrichtung vorne und hinten angrenzen.

Auch das Fokussierelement 14 ist aus einem Stahl umfassend Kobalt und Eisen. Durch die Anordnung radial nach außen von einer Längsmittelachse 24 weg erreicht das Fokussierelement Flussdichten von vorzugsweise 2 bis 3 Tesla. Der Magnetfluss wird durch den Magneten 18 dergestalt durch das als Stahlelement ausgebildete Fokussierelement 14 gepresst, dass sich eine Fokussierung der Magnetfeldlinien zur Rohrleitung hin ergibt. Während Standard-Halbach-Arrays durch die Sättigungsflussdichte in ihrer maximalen Einbringung des Magnetfeldes begrenzt sind, wird durch die erfindungsgemäße Ausbildung des Molches die Anziehungskraft bis zu einem Faktor von zumindest 3 wie vorbeschrieben vergrößert. Gewicht und Kosten können daher entsprechend gering gehalten werden. Sie Segmente der Magneteinheiten werden bei den Ausführungsbeispielen der Figuren von jeweils einem Magnet ausgebildet, der dann auch die Magnetisierungsrichtung des jeweiligen Segments vorgibt.

Auf der zur Längsmittelachse 24 des Molches hin gerichteten Innenseite der Magneteinheit 3 ist eine Inneneinfassung 22 vorhanden, die nach innen hin dass ohnehin bereits nahezu vernachlässigbare Magnetfeld der Magneteinheit zusätzlich abschirmt.

Ein Molchsegment eines erfindungsgemäßen Molches ist in Fig. 3 dargestellt, wobei eine Vielzahl von Magneteinheiten 3 in Umfangsrichtung um eine Längsachse 24 nebeneinander angeordnet sind. Darüber hinaus sind zwei Ringe von Magneteinheiten 3 hintereinander bezogen auf die Längsmittelachse 24 des Molches angeordnet. In Längsrichtung parallel zur Längsmittelachse 24 hintereinander liegende Magneteinheiten 3 sind gelenkig aneinander angebunden, so dass sich eine sehr gute Bogendurchgängigkeit der in Fig. 3 dargestellten Wirbelstrombremseinheit ergibt. Die Abstandshalter 1 selbst sind wiederum beweglich an einem Tragrahmen 26 gelagert.

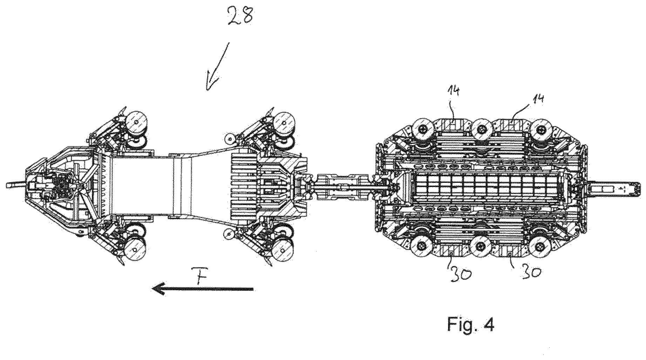

Ein erfindungsgemäßer Molch weist gemäß Fig. 4 ein in der Fig. 4 links dargestelltes Zugsegment 28 auf, welches für einen Vortrieb in Richtung F sorgt. Zusätzlich sind in den Fokussierelementen 14 nur teilweise und schematisch dargestellte Sensoren 30 eingebracht. Bei den Sensoren 30 handelt es sich insbesondere um EMAT-WT-Sensoren, d.h. Sensoren zur elektromagnetisch-akustischen Messung der Wandstärken der Rohrleitungswand 32. Das in der Figur rechte Molchsegment ist somit einerseits als Wirbelstrombremseinheit und andererseits als Funktionseinheit zum Aufnehmen von Inspektionsdaten bzw. Rohrleitungsinformationen ausgebildet. Die Magneteinheit kann auch Teil der Funktionseinheit sein.

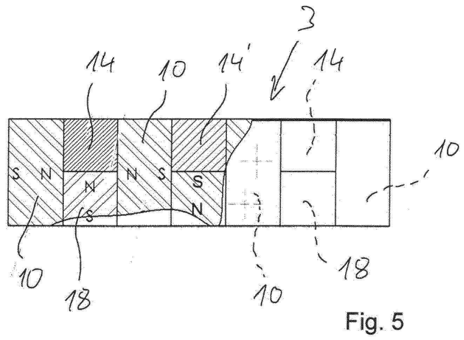

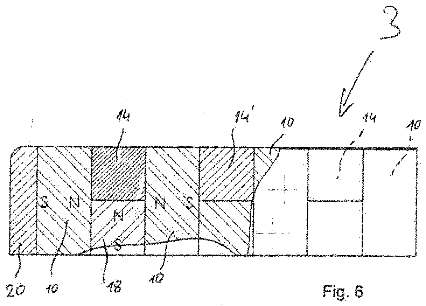

Eine Magneteinheit eines weiteren erfindungsgemäßen Molches mit einer größeren Anzahl als drei Magneten ist in der Fig. 5 dargestellt. Fokussierelemente 14 sind vorliegend jeweils an den Nordpolseiten der anliegenden Magnete 10 bzw. 18 angeordnet. Ein weiteres Fokussierelement 14' ist entsprechend von Südpolseiten der anliegenden Magnete begrenzt. Ergänzend dazu kann eine Magneteinheit wie bereits beschrieben die in Fig. 6 dargestellte Einfassung 20 aufweisen.

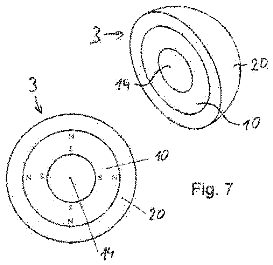

Fig. 7 offenbart in den dortigen beiden Abbildungen eine alternative Ausbildung einer Magneteinheit 3. Die in der Fig. 7 oben rechts befindliche Abbildung zeigt eine perspektivische Darstellung, während in Fig. 7 unten links ein dazu passender Querschnitt dargestellt ist. Ein halbkugelförmiges Fokussierelement 14 wird begrenzt von einem im Querschnitt kreisringförmigen, ein- oder mehrteiligen Magneten 10, welcher wiederum innerhalb einer Einfassung 20 angeordnet ist.

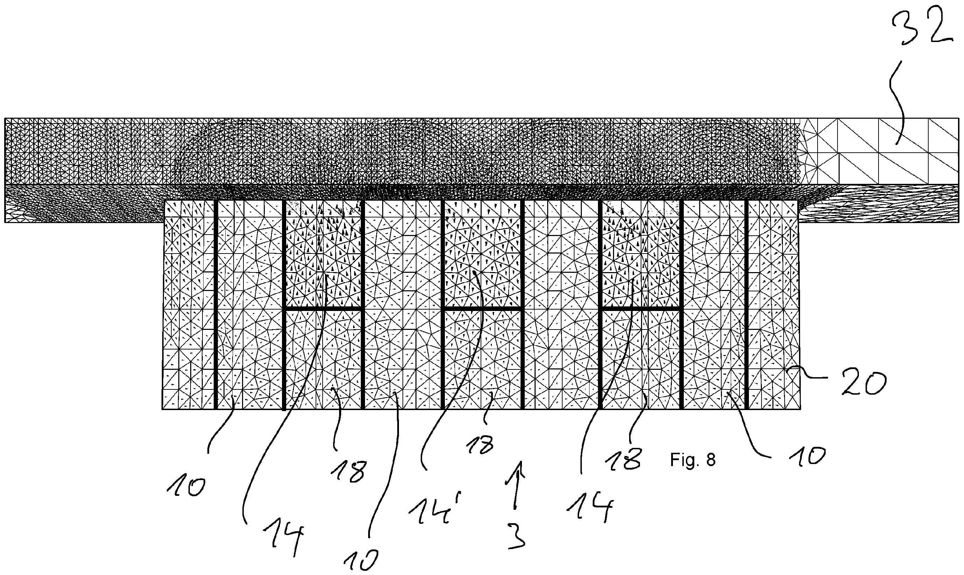

Die in einer Magneteinheit 3 und einer im Betriebsfall dicht neben dieser angeordneten Rohrleitungswand 32 entstehenden Magnetfeldlinien sind in der Fig. 8 durch schwarze, spitzwinklige Dreiecke symbolisiert. Diese befinden sich in der Fig. 8 in den Zellen eines aufgrund der Simulation entstandenen Dreiecksgitters sowohl der Magneteinheit 3 als auch der Rohrleitungswand 32. Je stärker die Gradienten der Magnetfeldlinien in Bezug auf Richtung und/oder Amplitude, desto feiner ist die Auflösung und je kleiner sind die Zellen des Gitters. Die in den Fokussierelementen 14, 14' vorhandenen magnetischen Flussdichten sind besonders groß, symbolisiert durch entsprechend große Dreiecke.

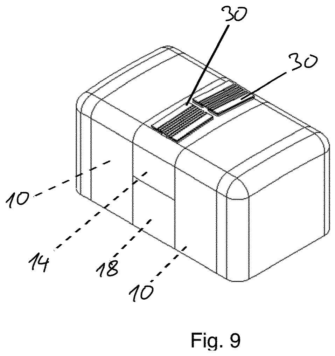

Gemäß einem weiteren Ausführungsbeispiel der Erfindung ist die Magneteinheit als Teil einer Funktionseinheit zum Aufnehmen von Inspektionsdaten bzw. Rohrleitungsinformationen ausgebildet (Fig. 9). Hierbei ist die Magneteinheit ähnlich eingehaust wie in Fig. 2 angeordnet, wobei zusätzlich auf Seiten der zur Rohrleitungswand bzw. zu inspizierenden Metalloberfläche gerichteten Seite des aufgrund der Einhausung nur gestrichelt herangezogenen Fokussierelements 14 zwei Sensoren 30 aufgebracht, bei denen es sich insbesondere um EMAT-WT-Sensoren handeln kann. Weitere Teile der Magneteinheit sind ebenfalls aufgrund der Einhausung nur gestrichelt herangezogene Magnete 10 und 18. Diese Funktionseinheit nutzt das durch die Fokussierung des Halbach-Arrays erzeugte und dadurch verstärkte Magnetfeld beispielsweise zur Anregung akustischer Wellen mit Hilfe von elektromagnetischer Kraftübertragung, wodurch die zerstörungsfreie Prüfung von Blechen jedweder Art bezogen auf die verbleibende Restwandstärke möglich wird.

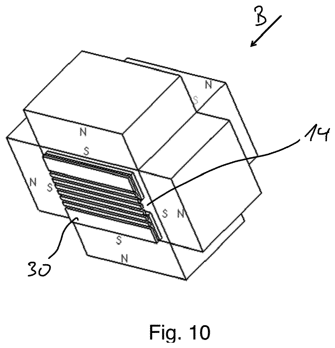

Bei einer weiteren erfindungsgemäßen Variante eines Molches mit einer wiederum ähnlich aufgebauten Magneteinheit werden zusätzliche Magnete an den Seiten der Magneteinheit angebracht, die in identischer Art und Weise das Magnetfeld weiterhin auf das Fokussierelement 14 fokussieren und somit weiter verstärken (Fig. 10). Auch hier ist wiederum ein Sensor 30 angeordnet, der die Aufnahme von Inspektionsdaten ermöglicht. Durch die nun auf vier Seiten eingeschlossene Variante des in einer Draufsicht insbesondere rechteckigen Fokussierelements wird ein nahezu maximal in Richtung der zu inspizierenden Oberfläche gerichtetes Magnetfeld und damit eine optimale magnetische Vorspannung erzeugt. Die Blickrichtung B ist hierbei mittels eines Pfeils B indiziert. Die Richtung B ist auch die Richtung des Magnetfelds in Richtung der Oberfläche. Beispielsweise können zwei, drei oder vier der Magneteinheiten nach Fig. 10 gleichmäßig in Umfangsrichtung um eine Molchlängsachse verteilt zur Wandstärkenmessung mittels der zugehörigen Funktionseinheit verwendet werden.

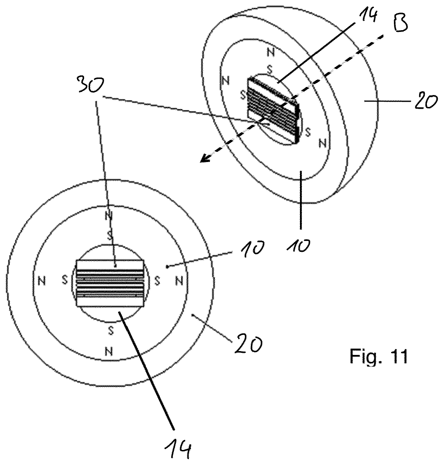

Eine maximal optimierte Variante ist weiterhin in Fig. 11 offenbart, bei der der Magnet 10 kugelschalenförmig um das zentrale Fokussierelement angeordnet ist. Eine Unteransicht ist im linken unteren Teil der Fig. 11 gezeigt, während eine perspektivische Darstellung in Fig. 11 im rechten oberen Teil dargestellt ist. Um die Kugelhalbschale des Magneten 10 befindet sich eine weitere Kugelhalbschale aus Stahl als magnetischer Rückschluss des fokussierten Magnetfeldes. Auch hier sind wiederum Sensoren 30 angeordnet, um Informationen über die inspizierte Oberfläche zu erhalten.

Allgemein können die Magneteinheiten eines erfindungsgemäßen Molches für die Ausbildung von Wirbelstrombremseinheiten verwendet werden, bei denen aufgrund einer Vielzahl von in Umfangsrichtung um eine Längsachse des Molches herum angeordneten Magneteinheiten in der Rohrleitungswand in Umfangsrichtung ein umlaufender Ringstrom ausbilden kann.

**Patentansprüche**

1. Molch, insbesondere Inspektions- oder Reinigungsmolch, zum Durchfahren einer Rohrleitung mit einer Rohrleitungswand (32), umfassend zumindest eine Funktionseinheit zum Reinigen der Rohrleitung und/oder zum Aufnehmen von Rohrleitungsinformationen sowie umfassend zumindest eine zur Magnetisierung der Rohrleitungswand vorgesehene Magneteinheit (3) mit einer Mehrzahl von Magneten (10, 18), wobei die Magneteinheit (3) mehrere Segmente mit jeweils zumindest einem Magneten (10,18) aufweist, **dadurch gekennzeichnet, dass** die Magnetisierungsrichtungen aneinander angrenzender Segmente zumindest in etwa um 90°, vorzugsweise um genau 90°, gegeneinander angewinkelt sind, dass die Magneteinheit (3) als Permanentmagnete ausgebildete Magnete (10,18) aufweist, dass die zueinander hin gerichteten Pole (N,S) zweier durch ein weiteres Segment getrennter Segmente eine identische Polarität aufweisen, dass das zwischen den beiden Segmenten angeordnete Segment als Vertikal-Segment im Betriebsfall eine in Richtung der Rohrleitungswand (32) gerichtete und vorzugsweise zumindest in etwa senkrecht zur Rohrleitungswand (32) ausgebildete Magnetisierungsrichtung aufweist und dass das Vertikalsegment von einer Längsmittelachse (24) aus betrachtet radial nach außen von einem Fokussierelement (14) begrenzt ist.

2. Molch nach Anspruch 1, **dadurch gekennzeichnet, dass** das Fokussierelement (14) auf zumindest drei Seiten von einem Magneten (10,18) begrenzt ist, wobei die auf diesen Seiten befindlichen Pole der Magneten (10,18) identische Polarität aufweisen.

3. Molch nach einem der vorherigen Ansprüche, **dadurch gekennzeichnet, dass** die Magneteinheit (3) in Längsrichtung wenigstens eine aus einem magnetisierbaren Material zumindest mit ausgebildete Einfassung (20) aufweist, die die Magnete (10,18) der Magneteinheit begrenzt.

4. Molch nach einem der vorherigen Ansprüche, **dadurch gekennzeichnet, dass** die Magneteinheit (3) einen Sensor (30) zur Aufnahme von Inspektionsdaten aufweist.

5. Molch nach einem der vorherigen Ansprüche, **dadurch gekennzeichnet, dass** der Sensor (30) in dem Fokussierelement (14), in einer Ausnehmung desselben und/oder an dem Fokussierelement (14) angeordnet ist.

6. Molch nach einem der vorherigen Ansprüche, **dadurch gekennzeichnet, dass** die Magneteinheit (3) eine Wirbelstrombremseinheit mit ausbildet.

7. Molch nach einem der vorherigen Ansprüche, **dadurch gekennzeichnet, dass** die Magneteinheit (3) in deren Längsrichtung zumindest drei hintereinander angeordnete Magnete (10,18) besitzt.

8. Molch nach einem der vorherigen Ansprüche, **dadurch gekennzeichnet, dass** in Umfangsrichtung des Molches mehrere Magneteinheiten (3) nebeneinander angeordnet sind.

9. Molch nach einem der vorherigen Ansprüche, **gekennzeichnet durch** wenigstens einen insbesondere einstellbaren Abstandshalter (1), über den Magneteinheit (3) von der Rohrleitungswand (32) beabstandet positionierbar ist.

10. Molch nach einem der vorherigen Ansprüche, **dadurch gekennzeichnet, dass** die Länge der Magneteinheit (3) einschließlich etwaiger Einfassungen weniger als $0,5*D_{Pipe}$, vorzugsweise weniger als $0,3*D_{Pipe}$, mit $D_{Pipe}$ = Durchmesser der Rohrleitung [m] beträgt.

11. Molch nach einem der vorherigen Ansprüche, **dadurch gekennzeichnet, dass** die Magneteinheit bei einer Geschwindigkeit von 2 m/s in der Rohrleitung zur Erzeugung einer Bremskraft F in Abhängigkeit des Rohrleitungsdurchmessers von mindestens

$$F = m * D_{Pipe}$$

ausgebildet ist, wobei $D_{Pipe}$ = Durchmesser der Rohrleitung [m] und m = 7000 N/m.

## Claims

1. Pig, in particular inspection or cleaning pig, for passing through a pipeline having a pipeline wall (32), comprising at least one functional unit for cleaning the pipeline and/or recording pipeline information and comprising at least one magnet unit (3), which is provided for magnetizing the pipeline wall and has a plurality of magnets (10, 18), wherein the magnet unit (3) has a plurality of segments each with at least one magnet (10, 18), **characterized in that** the magnetization directions of mutually adjacent segments are angled at least by approximately 90°, preferably by exactly 90°, to one another, **in that** the magnet unit (3) has magnets (10, 18) formed as permanent magnets, **in that** the poles (N, S) of two segments which are directed toward each other and which are separated by a further segment have an identical polarity, **in that** the segment arranged between the two segments as a vertical segment has a magnetization direction directed in the direction of the pipeline wall (32) in operation and preferably formed at least approximately perpendicular to the pipeline wall (32), and **in that** the vertical segment, viewed from a longitudinal central axis (24), is bounded radially on the outside by a focusing element (14).

2. Pig according to Claim 1, **characterized in that** the focusing element (14) is bounded by a magnet (10, 18) on at least three sides, wherein the poles of the magnets (10, 18) located on these sides have an identical polarity.

3. Pig according to one of the preceding claims, **characterized in that** the magnet unit (3) has in the longitudinal direction at least one enclosure (20) at least also formed of a magnetizable material, which bounds the magnets (10, 18) of the magnet unit.

4. Pig according to one of the preceding claims, **characterized in that** the magnet unit (3) has a sensor (30) for recording inspection data.

5. Pig according to one of the preceding claims, **characterized in that** the sensor (30) is arranged in the focusing element (14), in a recess in the same and/or on the focusing element (14).

6. Pig according to one of the preceding claims, **characterized in that** the magnet unit (3) also forms an eddy current braking unit.

7. Pig according to one of the preceding claims, **characterized in that** the magnet unit (3) has at least three magnets (10, 18) arranged one after another in its longitudinal direction.

8. Pig according to one of the preceding claims, **characterized in that** a plurality of magnet units (3) are arranged beside one another in the circumferential direction of the pig.

9. Pig according to one of the preceding claims, **characterized by** at least one in particular adjustable spacer (1), via which the magnet unit (3) can be positioned at a distance from the pipeline wall (32).

10. Pig according to one of the preceding claims, **characterized in that** the length of the magnet unit (3), including any enclosures, is less than $0.5 * D_{Pipe}$, preferably less than $0.3 * D_{Pipe}$, where $D_{Pipe}$ = diameter of the pipeline [m].

11. Pig according to one of the preceding claims, **characterized in that** at a speed of 2 m/s in the pipeline, the magnet unit is designed to generate a braking force F depending on the pipeline diameter of at least

$$F = m * D_{Pipe},$$

where $D_{Pipe}$ = the diameter of the pipeline [m] and m = 7000 N/m.

## Revendications

1. Racleur, en particulier racleur d'inspection ou de nettoyage, pour traverser une conduite avec une paroi de conduite (32), comprenant au moins une unité fonctionnelle pour le nettoyage de la conduite et/ou pour l'enregistrement d'informations sur la conduite, et comprenant aussi au moins une unité magnétique (3) prévue pour la magnétisation de la paroi de la conduite avec une pluralité d'aimants (10, 18), l'unité magnétique (3) présentant plusieurs segments avec chacun au moins un aimant (10, 18), **caractérisé en ce que** les directions de magnétisation de segments adjacents les uns aux autres sont inclinées au moins d'environ 90°, de préférence d'exactement 90°, l'une par rapport à l'autre, **en ce que** l'unité magnétique (3) présente des aimants (10, 18) conçus sous la forme d'aimants permanents, **en ce que** les pôles (N, S) orientés l'un vers l'autre de deux segments séparés par un autre segment présentent une polarité identique, **en ce que** le segment agencé entre les deux segments présente, en tant que segment vertical, lors du fonctionnement, une direction d'aimantation orientée en direction de la paroi de la conduite (32) et de préférence au moins approximativement perpendiculaire à la paroi de la conduite (32), et **en ce que** le segment vertical, vu à partir d'un axe médian longitudinal (24), est limité radialement vers l'extérieur par un élément de focalisation (14).

2. Racleur selon la revendication 1, **caractérisé en ce que** l'élément de focalisation (14) est délimité sur au moins trois côtés par un aimant (10, 18), les pôles des aimants (10, 18) se trouvant sur ces côtés présentant une polarité identique.

3. Racleur selon l'une des revendications précédentes, **caractérisé en ce que** l'unité magnétique (3) présente, dans le sens longitudinal, au moins une enveloppe (20) réalisée au moins en partie en un matériau magnétisable, qui délimite les aimants (10, 18) de l'unité magnétique.

4. Racleur selon l'une des revendications précédentes, **caractérisé en ce que** l'unité magnétique (3) présente un capteur (30) pour l'enregistrement de données d'inspection.

5. Racleur selon l'une des revendications précédentes, **caractérisé en ce que** le capteur (30) est agencé dans l'élément de focalisation (14), dans un évidement de celui-ci et/ou sur l'élément de focalisation (14).

6. Racleur selon l'une des revendications précédentes, **caractérisé en ce que** l'unité magnétique (3) forme une unité de freinage à courants de Foucault.

7. Racleur selon l'une des revendications précédentes, **caractérisé en ce que** l'unité magnétique (3) possède dans sa direction longitudinale au moins trois aimants (10, 18) agencés les uns derrière les autres.

8. Racleur selon l'une des revendications précédentes, **caractérisé en ce que** plusieurs unités magnétiques (3) sont agencées les unes à côté des autres dans la direction circonférentielle du racleur.

9. Racleur selon l'une des revendications précédentes, **caractérisé par** au moins une entretoise (1), en particulier réglable, par laquelle l'unité magnétique (3) est apte à être positionnée à distance de la paroi de la conduite (32).

10. Racleur selon l'une des revendications précédentes, **caractérisé en ce que** la longueur de l'unité magnétique (3), y compris les éventuels enveloppes, est inférieure à $0,5*D_{Pipe}$, de préférence inférieure à $0,3*D_{Pipe}$, avec $D_{Pipe}$ = diamètre de la conduite [m].

11. Racleur selon l'une des revendications précédentes, **caractérisé en ce que** l'unité magnétique est conçue pour générer dans la conduite, à une vitesse de 2 m/s, une force de freinage F en fonction du diamètre de la conduite, d'au moins

$$F = m*D_{Pipe},$$

avec $D_{Pipe}$ = diamètre de la conduite [m] et m = 7000 N/m.

Fig. 1

Fig. 2

Fig. 3

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013011626 A1